# EUROPEAN PATENT SPECIFICATION

(11) **EP 4 547 510 B1**
(45) Date of publication and mention of the grant of the patent: **08.04.2026**
(21) Application number: 23762286.5
(22) Date of filing: 22.06.2023
(51) Int. Cl.: B60K 15/077, B60P 3/22, B65D 90/52

(54) **AN ANTI-SLOSHING MECHANISM**
ANTISCHWAPPMECHANISMUS
MÉCANISME ANTI-BALLOTTEMENT

(30) Priority: 30.06.2022 TR 202210859
(43) Date of publication of application: 07.05.2025
(73) Proprietor: Tusas- Turk Havacilik Ve Uzay Sanayii Anonim Sirketi, 06980 Ankara (TR)
(72) Inventor: CAMLICA, Fahri Bugra, 06980 Kahramankazan/Ankara (TR)
(74) Representative: Berkkam, Ayfer
(86) International application number: PCT/TR2023/050608
(87) International publication number: WO 2024/005760

(56) References cited:
- WO-A1-2005/002993
- WO-A1-2016/088089
- GB-A- 2 553 106
- US-A1- 2003 019 363
- US-A1- 2006 220 370

## Description

The present invention relates to an anti-sloshing mechanism provided in motor vehicles.

If a liquid is provided in a tank or a similar chamber subject to movement, such a liquid tends to move according to the movement of the tank. Each time the acceleration affects the tank, the liquid in the tank creates agitation when it hits the walls of the tank. Motion dynamics can vary in vehicles and can create large accelerations. Internal and external fuel tanks are the most important tanks in use. These chambers can contain a large amount of liquid fuel due to their mission needs, and can be used wherever required. Depending on power and dimensions of the vehicle, the liquid agitation in the tank with the effect of the acceleration due to the dynamic movement can create a force sufficient to affect the dynamics of the vehicles, depending on the volume of the liquid. This can create undesirable and dangerous displacement effects in the general and local center of gravity. In order to prevent agitation and effects thereof, anti-sloshing units are used in various geometries and numbers in the tank or chamber.

US6736282B2, which is included in the known-state of the art, discloses a slosh-inhibiting element for the fuel in a fuel tank. It discloses a latching mechanism which allows for fixation of the anti-sloshing element to the inner wall of the fuel tank. The slosh-inhibiting element has a mounting position in which the fuel tank can be inserted through a mounting opening. It is produced separately from the fuel tank and can be installed via the mounting opening.

The US2006220370A1 document in the known state of the art describes a fuel damper system designed to reduce or eliminate the movement of fuel inside a tank. This system includes a baffle assembly connected to a fuel pump, allowing the baffles to transition between retracted and deployed configurations. In the retracted configuration, the assembly can be inserted into or passed through an aperture in the fuel tank, while in the deployed configuration, the baffles act to dampen the movement of fuel, minimizing sloshing and associated noise or instability within the tank.

In addition, the document WO2005002993A1 describes a tank designed for containing fluids, featuring a partition that reduces fluid sloshing during transport. The tank has a peripheral wall with a partition inside, which is fixed to the wall. The partition includes at least one flexible, fatigue-resistant, plate-shaped element made from materials like plastic or thin metal. This design reduces the tank's empty weight while effectively counteracting sloshing by allowing the partition to deform slightly during fluid movement.

The anti-sloshing mechanism according to the invention is defined by the features of claim 1.

Thanks to an anti-sloshing mechanism according to the present invention, anti-sloshing mechanisms that are in detachable form to fuel tanks are provided.

An object of the present invention is to provide an anti-sloshing mechanism in a geometrical structure that can prevent the sloshing and/or agitating movement of the liquid in fuel tanks.

Another object of the present invention is to provide a locking mechanism that can fix the sloshing mechanism at a desired position in the fuel tank.

A further object of the present invention is to provide an anti-sloshing mechanism that can be received and mounted to the fuel tank after the production of the fuel tank.

The anti-sloshing mechanism realized to achieve the object of the invention, which is illustrated in the first claim and other claims dependent thereon, comprises a tank provided in a motor vehicle for containing a fuel. There is at least one anti-sloshing member in the tank, at a position predetermined by the user. Depending on the movement of the motor vehicle, the fuel in the tank can undesirably slosh, agitate and accelerate. In motor vehicles, anti-sloshing members are used to prevent unwanted acceleration and agitation of the fuel in tanks which carry the fuel while the vehicle is in motion.

The anti-sloshing mechanism according to the invention comprises a plurality of blades forming the anti-sloshing member in the same form as the section of the tank. Each of the blades is mounted in the center to form the anti-sloshing member. There is a locking element that fixes the anti-sloshing member in the tank so that it touches both the center and the inner wall of the tank. The anti-sloshing member is formed by connecting/mounting the blades to each other. The anti-sloshing member, which consists of N-blades, is received into the tank by the user. The anti-sloshing member is preferably mounted on the tank in a removable way, in case it is needed. The blades are preferably fan-shaped in fuel tanks. The center is preferably in the form of a joint. There is a locking element that locks the anti-sloshing member in the tank such that it contacts both the center and the inner wall of the tank.

According to the invention as defined by claim 1, the anti-sloshing mechanism comprises a plurality of channels located on the center to surround the center. The blades are moved radially around the center on the channels and are brought to positions predetermined by the user. The center is preferably in the form of a joint, on which channels are provided. N-blades move radially in N-channels. The blades are opened by sliding over the channels in the tank and anti-sloshing is provided.

In an embodiment of the invention, the anti-sloshing mechanism comprises at least one access door providing access to the anti-sloshing member and allowing the anti-sloshing member to be brought to a position predetermined by the user. There is a closed position (I) in which each of the blades is positioned on the center facing each other so that they can be inserted by the user through the access door; and an open position in which the blades are triggered by the user around the center and touch the inner wall of the tank to wrap the inner wall of the tank (II). The blades are received into the tank piece by piece through the access door. Each of the blades is overlapped and is in a closed position (I), which appears as a single blade when viewed from the front. The blades, which have been received into the tank through the access door by the user, are moved around the center on the channels so as to rotate around the center and open. There is an open position (II) in which the blades are open and take the form of the inner wall of the tank by contacting thereto, thus creating the anti-sloshing form.

In an embodiment of the invention, the anti-sloshing mechanism comprises a plurality of slots on each blade. There is a plurality of pins on the locking element, which are form-compatible with the slots and are inserted into the slots. When the pins are inserted into the slots, the anti-sloshing member is fixed in the position predetermined by the user. When the anti-sloshing member is opened in the tank and brought to the desired position, a locking element is used to fix the anti-sloshing member.

In an embodiment of the invention, the anti-sloshing mechanism comprises a plurality of first pins on the locking element. Primarily, the first pins contact with the slot. Thus, it allows the anti-sloshing member to be kept in the position where it is desired to be fixed in the tank. There is a plurality of second pins on the locking element that are secondarily inserted into the slots. The second pins trigger the blades, allowing the blade tips to contact the inner wall of the tank and locking the anti-sloshing member inside the tank. The first pins enable the anti-sloshing member to remain in the desired position in the tank, and the second pins provide the main locking and fixation the anti-sloshing member. When the blades are opened on the joint, the first and second pins are inserted into the slots provided on the blades.

In an embodiment of the invention, the anti-sloshing mechanism comprises a plurality of first slots on the blades, which are eccentric in shape. The first slots are form-compatible with the first pins and the first pins are inserted into the first slots. By inserting the first pins into the first slots, the blades forming the anti-sloshing member in the tank are fixed in the position predetermined by the user. After the first pins and the first slots are positioned opposite each other in the tank and the first pins are inserted into the first slots, the second pins on the locking element are inserted into the second slots on the blades. Thus, locking is provided and the anti-sloshing member is fixed in the position determined by the user in the tank. The first pins are moved towards the first slots by the user. The first pins are inserted in the first slots. In order for the anti-sloshing member to remain fixed in the desired position in the tank, the second pins are placed in the second slots. Thus, the anti-sloshing member is locked in its position in the tank. During the locking of the anti-sloshing member, the blade tips are pressed against the inner wall of the tank.

In an embodiment of the invention, the anti-sloshing mechanism comprises the locking element made of a harder material than the anti-sloshing member. Thus, when the pins are positioned in the slot in an opposite manner, the locking element pushes the blades to the inner wall of the tank and presses the blade tips to the inner wall of the tank to fix the anti-sloshing member. When the locking element is preferably made of a harder material than the anti-sloshing member, the pins are made of harder material than the blades, and when they meet the slots, they push the slots. In this way, the blades are pushed towards the inner wall of the tank and the anti-sloshing member is locked.

In an embodiment of the invention, the anti-sloshing mechanism comprises the anti-sloshing member consisting of a plurality of blades in L and/or T flange form, which are received individually or integrally into the tank through the access door. The blades contact the inner wall of the tank at the flange parts and surround the inner walls of the tank by the locking element. There are blades in L or T flange form. Flange-shaped blades are received into the tank by the user individually or in an assembled manner through the access door. While creating the anti-sloshing structure by means of the blades, in this embodiment, the blades, which are piece by piece, are mounted directly to each other to form the anti-sloshing member, preferably without a radial sliding movement. The blades are mounted individually on the center so as to almost completely surround the inner surface of the tank. The flanged anti-sloshing member is fixed in the desired position in the tank by the locking element.

In an embodiment of the invention, the anti-sloshing mechanism comprises a plurality of gaps on each blade. There is a plurality of protrusions on the locking element that are form-compatible with the gaps. The protrusions are opposite the gaps and inserted into the gaps. L and/or T shaped flanged blades are received into the tank individually, and the blades are mounted without a slide-opening movement. Blades are mounted in the tank or received into the tank after assembly. In this embodiment, the locking element comprises protrusions that are engaged into the gaps in the blades. Therefore, the protrusions are inserted into the gaps and the anti-sloshing member is locked in the position determined by the user in tank.

In an embodiment of the invention, the anti-sloshing mechanism comprises a plurality of holes which are provided on the blades in geometric shapes predetermined by the user. Thanks to the holes, the fuel will be almost completely prevented from sloshing and/or agitating in the tank. The holes also allow the fuel to be directed along the tank between the blades and/or the anti-sloshing members in case of multiple anti-sloshing members, in a manner predetermined by the user.

In an embodiment of the invention, the anti-sloshing mechanism comprises the fuel tank provided in air, space, land and/or sea vehicles.

The anti-sloshing mechanism realized to achieve the object of the invention is illustrated in the attached drawings, in which:
Figure 1 is a perspective view of the anti-sloshing mechanism and the tank.
Figure 2 is a front view of the anti-sloshing member in the closed position (I).
Figure 3 is a front view of the anti-sloshing member in the open position (II).
Figure 4 is a perspective view of the anti-sloshing member in the open position (II).
Figure 5 is a perspective view of the locking element.
Figure 6 is a front view of the blade, first slot and second slot.
Figure 7 is a perspective view of the blade in the form of a T flange.
Figure 8 is a perspective view of the anti-sloshing member consisting of blades in the form of T flanges.
Figure 9 is a schematic view of the locking element when the protrusion is inserted into the gap.

All the parts illustrated in figures are individually assigned a reference numeral and the corresponding terms of these numbers are listed below:
- 1.: Anti-sloshing mechanism
- 2.: Anti-sloshing member
- 3.: Blade
- 4.: Center
- 5.: Locking Element
- 6.: Channel
- 7.: Access door
- 8.: Slot
801 - First slot
802 - Second slot
- 9.: Pin
901 - First pin
902 - Second pin
- 10.: Gap
- 11.: Protrusion
- 12.: Hole
(T) Tank

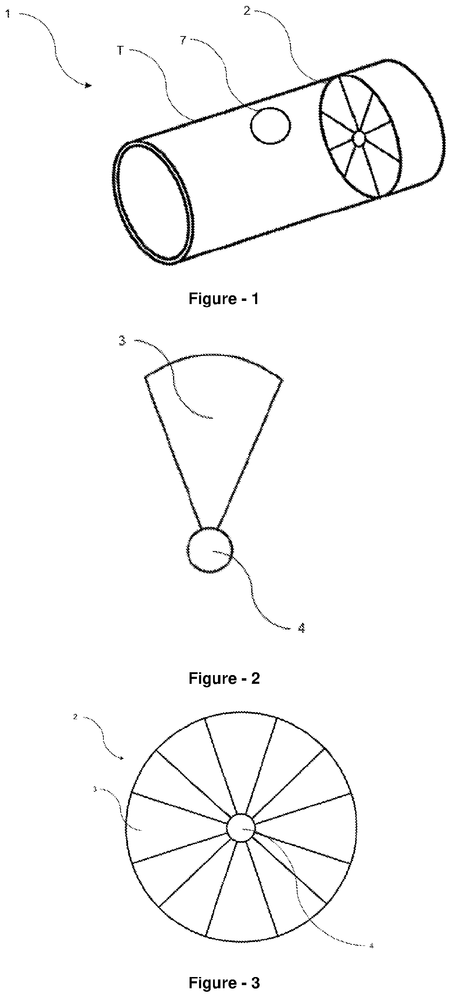

The anti-sloshing mechanism (1) comprises a tank (T) located in a motor vehicle for containing fuel; at least one anti-sloshing member (2) located in the tank (T) at a position predetermined by the user and preventing the fuel from sloshing and/or agitating in the tank (T) at a rate predetermined by the user (Figure 1).

The anti-sloshing mechanism (1) according to the invention comprises a plurality of blades (3) located in the anti-sloshing member (2) in a form-compatible manner with the section of tank (T); a center (4) to which each of the blades (3) is mounted to form the anti-sloshing member (2); a locking element (5) that fixes the anti-sloshing member (2) in the tank (T) such that the anti-sloshing member (2) almost completely contacts both the center (4) and the inner wall of the tank (T).

The anti-sloshing mechanism (1) is used in tanks (T) of motor vehicles that contains fuel, in order to prevent undesired acceleration and agitation of the fuel and to ensure that the fuel is directed as desired by the user. At least one anti-sloshing member (2) is provided in the tank (T) at a position predetermined by the user.

There is a plurality of blades (3) forming the anti-sloshing member (2) so as to be form-compatible with the section of the tank (T). The anti-sloshing member (2), consisting of N-blades (3), is received into the tank (T) by the user. The blades (3) are preferably fan-shaped in cylindrical fuel tanks (T). The blades (3) are assembled around the center (4) to form the anti-sloshing member (2). The center (4) is preferably in the form of a joint. There is a locking element (5) that fixes the anti-sloshing member (2) in the tank (T) such that it touches both the center (4) and the inner wall of the tank (T). When the anti-sloshing member (2) is placed inside the tank (T), it is held rigidly by the locking element (5) (Figure 2, Figure 3, Figure 4).

In an embodiment of the invention, the anti-sloshing mechanism (1) comprises a plurality of channels (6) located on the center (4) to almost completely surround the center (4); the blades (3) which are moved radially on the channels (6) around the center (4) and brought to a position predetermined by the user. The center (4) is preferably in the form of a joint, on which channels (6) are provided. N- blades (3) make a radial sliding motion in N-channels (6). In this way, the blades (3) are opened in the tank (T) and form the anti-sloshing member (2).

In an embodiment of the invention, the anti-sloshing mechanism (1) comprises at least one access door (7) which allows the anti-sloshing member (2) to be brought to the position predetermined by the user, and provides access to the anti-sloshing member (2); the anti-sloshing member (2) which has a closed position (I) in which the blades (3) are positioned on the center (4) to face each other, thereby being received through the access door (7) by the user, and an open position (II) in which the blades (3) are triggered and opened by the user around the center (4), such that they almost completely take the form of the inner wall of the tank (T) and almost completely surround the inner wall of the tank (T). The blades (3) are received into the tank (T) through the access door (7). There is a closed position (I) in which the blades (3) are seen as a single blade (3) when viewed from the front, with each of the blades (3) facing each other. The blades (3) are preferably received into the tank (T) by the user in this closed position (I). The blades (3), which have been received into the tank (T) through the access door (7) by the user, are opened here. The blades (3) are rotated on the channels (6) around the center (4) so as to be opened. When the blades (3) are opened and take the form of the anti-sloshing member (2), they preferably take the form of a fan. There is an open position (II) in which, when all the blades (3) are opened, tips of the blades (3) contact the inner wall of the tank and thus the anti-sloshing member (2) is located to almost completely surround the inner wall of the tank.

In an embodiment of the invention, the anti-sloshing mechanism (1) comprises a plurality of slots (8) located on each blade (3); a plurality of pins (9) located on the locking element (5), which are form-compatible with the slots (8) and thus inserted into the slots (8) to fix the anti-sloshing member (2) in a position predetermined by the user. When the anti-sloshing member (2) is brought to the desired position in the tank (T) and the blades (3) are brought to the open position (II), the locking element (5) is used to keep the anti-sloshing member (2) rigid. There are slots (8) on each blade (3). Pins (9) are provided on the locking element (5), which are form-compatible with the slots (8) and prevent the anti-sloshing member (2) from moving when inserted into the slots (8).

In an embodiment of the invention, the anti-sloshing mechanism (1) comprises a plurality of first pins (901) located on the locking element (5), which make first contact with the slot (8), thus allowing the anti-sloshing member (2) to be kept in the position where it is desired to be fixed in the tank (T); a plurality of second pins (902) on the locking element (5), which are inserted into the slots (8) secondarily, thereby triggering the blades (3) so that the blade (3) tips almost completely contact the inner wall of the tank (T) and the anti-sloshing member (2) is almost completely fixed in the tank (T). The first pins (901) enable the anti-sloshing member (2) to be fixed in the open position (II) in the tank (T) and remain in the desired position. The second pins (902), on the other hand, push the blades (3) towards the inner wall of the tank (T) and press the tips of the blade (3) against the inner wall of the tank (T), thus providing locking and fixing.

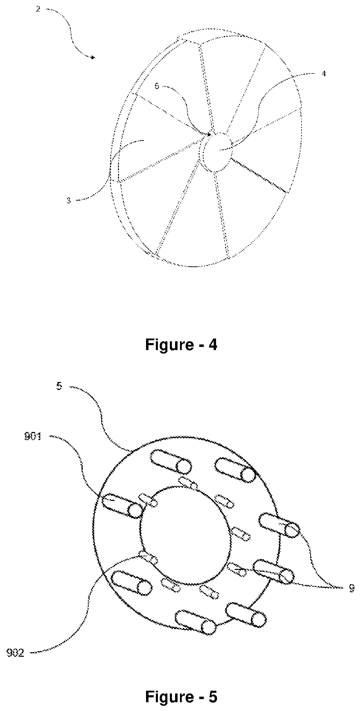

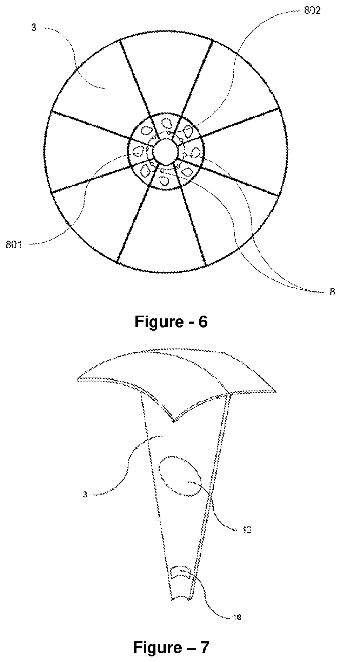

In an embodiment of the invention, the anti-sloshing mechanism (1) comprises a plurality of first slots (801) on the blades (3) with an eccentric form, which are almost completely form-compatible with the first pins (901), wherein when the first pins (901) are positioned in the first slots (801), the first slots (801) allow the anti-sloshing member (2) to be brought to the desired position in the tank (T), in a position determined by the user; a plurality of second slots (802) on the blades (3), wherein after the first pins (901) and the first slots (801) are positioned facing each other in the tank (T), the second slots (802) are inserted into the second pins (902), thereby providing locking and fixing the anti-sloshing member (2) in the tank (T) in a position determined by the user. When the first pins (901) are moved towards the first slots (801) by being triggered by the user, they push the blades (3) to contact the inner wall, so that the anti-sloshing member (2) is at the desired position in the tank (T). When the first pins (901) are moved into the first slots (801), the second pins (902) fit into the second slots (802). Thus, the anti-sloshing member (2) is locked in its position in the tank (T). The blades (3) contact the inner wall of the tank (T) and are fixed until they are disassembled again by the user, so that the blades (3) remain immobile against possible sloshing and provide the anti-sloshing (2) feature (Figure 5, Figure 6).

In an embodiment of the invention, the anti-sloshing mechanism (1) comprises the locking element (5) made of a harder material than the anti-sloshing member (2), thereby pushing the blades (3) to the inner wall of the tank (T), pressing the blade (3) tips against the inner wall of the tank (T) and fixing the anti-sloshing member (2), when the pins (9) are positioned in the slot (8) to face each other. The locking element (5) is preferably made of a harder material than the anti-sloshing member (2). Therefore, when the locking element (5) is moved towards the anti-sloshing member (2), since the pins (9) are made of a harder material, when they meet the slots (8) they push the slots (8) to the inner surface of the tank (T). Thus, the blades (3) are pushed towards the inner wall of the tank (T) and the anti-sloshing member (2) is fixed.

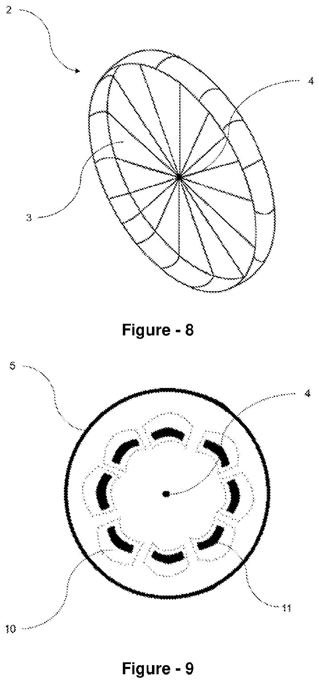

In an embodiment of the invention, the anti-sloshing mechanism (1) comprises a plurality of blades (3) in L and/or T flange form, which are received individually or integrally through the access door (7) into the tank (T), which contact the inner wall of the tank (T) at the flange parts and which almost completely surround the inner walls of the tank by the locking element (5). A plurality of blades (3), which are in L and/or T flange form, are received into the tank (T) through the access door (7) individually or received into the anti-sloshing member (2) in an assembled manner. The blades (3) contact the inner wall of the tank (T) at their flange parts and surround the inner walls of the tank (T) by the locking element (5). Blades (3) are mounted individually to each other in the center (4) to form the anti-sloshing member (2). The blades (3) in the L-flange form are preferably received into the tank (T) in an assembled or disassembled manner, and the blades (3) are assembled without performing a rotating/sliding opening movement. Similarly, the T-flanged blades (3) are received into the tank (T) to be assembled or received into the tank (T) after assembly. The flanged blades (3) take the form of the anti-sloshing member (2) and are fixed by the locking element (5) in a position desired by the user in the tank (T) (Figure 8, Figure 9).

In an embodiment of the invention, the anti-sloshing mechanism (1) comprises a plurality of gaps (10) located on each blade (3); a plurality of protrusions (11) located on the locking element (5) so as to correspond to the gaps (10) on the blades (3) in a form-compatible manner, and which are inserted into the gaps (10) to enable the anti-sloshing member (2) to be fixed in the tank (T). Gaps (10) are provided on the blades (3) in order to fix the anti-sloshing member (2). In this embodiment, protrusions (11) are provided on the locking element (5) that are inserted into the gaps (10). In this way, the anti-sloshing member (2) is locked in the tank (T) in a position determined by the user. The protrusions (11) remain opposite to the gaps (10) and are inserted into the gaps.

In an embodiment of the invention, the anti-sloshing mechanism (1) comprises a plurality of holes (12) located on the blades (3) in geometric forms predetermined by the user, thus allowing the movement of the fuel in the tank (T) to not create sloshing and to be directed in a manner predetermined by the user. There are holes (12) on the blades (3) that allow the anti-sloshing members (2) to pass the fuel. Various geometrical holes (12) and/or axial openings are provided on the blades (3), at positions determined by the user, to allow fuel flow (Figure 7).

In an embodiment of the invention, the anti-sloshing mechanism (1) comprises the fuel tank (T) provided in air, space, land and/or sea vehicles.

## Claims

1. An anti-sloshing mechanism (1) comprising a tank (T) located in a motor vehicle for containing fuel; at least one anti-sloshing member (2) located in the tank (T) at a position predetermined by the user and preventing the fuel from sloshing and/or agitating in the tank (T) at a rate predetermined by the user, a plurality of blades (3) located in the anti-sloshing member (2) in a form-compatible manner with the section of tank (T); a center (4) to which each of the blades (3) is mounted to form the anti-sloshing member (2); a locking element (5) that fixes the anti-sloshing member (2) in the tank (T) such that the anti-sloshing member (2) almost completely contacts both the center (4) and the inner wall of the tank (T), **characterised by** a plurality of channels (6) located on the center (4) to almost completely surround the center (4), wherein the blades (3) are adapted to be moved radially on the channels (6) around the center (4) and brought to a position predetermined by the user.

2. An anti-sloshing mechanism (1) according to claim 1 or claim 2, **characterized by** comprising at least one access door (7) which allows the anti-sloshing member (2) to be brought to the position predetermined by the user, and provides access to the anti-sloshing member (2); the anti-sloshing member (2) which has a closed position (I) in which the blades (3) are positioned on the center (4) to face each other, thereby being received through the access door (7) by the user, and an open position (II) in which the blades (3) are triggered and opened by the user around the center (4), such that they almost completely take the form of the inner wall of the tank (T) and almost completely surround the inner wall of the tank (T).

3. An anti-sloshing mechanism (1) according to any of the preceding claims, **characterized by** comprising a plurality of slots (8) located on each blade (3); a plurality of pins (9) located on the locking element (5), which are form-compatible with the slots (8) and thus inserted into the slots (8) to fix the anti-sloshing member (2) in a position predetermined by the user.

4. An anti-sloshing mechanism (1) according to claim 3, **characterized by** comprising a plurality of first pins (901) located on the locking element (5), which make the first contact with the slot (8), thus allowing the anti-sloshing member (2) to be kept in the position where it is desired to be fixed in the tank (T); a plurality of second pins (902) on the locking element (5), which are inserted into the slots (8) secondarily, thereby triggering the blades (3) so that the blade (3) tips almost completely contact the inner wall of the tank (T) and the anti-sloshing member (2) is almost completely fixed in the tank (T).

5. An anti-sloshing mechanism (1) according to claim 4, **characterized by** comprising a plurality of first slots (801) on the blades (3) with an eccentric form, which are almost completely form-compatible with the first pins (901), wherein when the first pins (901) are positioned in the first slots (801), the first slots (801) allow the anti-sloshing member (2) to be brought to the desired position in the tank (T), in a position determined by the user; a plurality of second slots (802) on the blades (3), wherein after the first pins (901) and the first slots (801) are positioned facing each other in the tank (T), the second slots (802) are inserted into the second pins (902), thereby providing locking and fixing the anti-sloshing member (2) in the tank (T) in a position determined by the user.

6. An anti-sloshing mechanism (1) according to any of the claims 3 to 5, wherein the locking element (5) made of a harder material than the anti-sloshing member (2), thereby pushing the blades (3) to the inner wall of the tank (T), pressing the blade (3) tips against the inner wall of the tank (T) and fixing the anti-sloshing member (2), when the pins (9) are positioned in the slot (8) to face each other.

7. An anti-sloshing mechanism (1) according to claim 1, wherein the plurality of blades (3) in L and/or T flange form, which are received individually or integrally through the access door (7) into the tank (T), which contact the inner wall of the tank (T) at the flange parts and which almost completely surround the inner walls of the tank by the locking element (5).

8. An anti-sloshing mechanism (1) according to claim 7, **characterized by** comprising a plurality of gaps (10) located on each blade (3); a plurality of protrusions (11) located on the locking element (5) so as to correspond to the gaps (10) on the blades (3) in a form-compatible manner, and which are inserted into the gaps (10) to enable the anti-sloshing member (2) to be fixed in the tank (T).

9. An anti-sloshing mechanism (1) according to any of the preceding claims, **characterized by** comprising a plurality of holes (12) located on the blades (3) in geometric forms predetermined by the user, thus allowing the movement of the fuel in the tank (T) to not create sloshing and to be directed in a manner predetermined by the user.

10. An anti-sloshing mechanism (1) according to any of the preceding claims, wherein the fuel tank (T) is provided in an air, space, land and/or sea vehicle.

## Patentansprüche

1. Anti-Schwapp-Mechanismus (1), umfassend einen in einem Kraftfahrzeug angeordneten Tank (T) zur Aufnahme von Kraftstoff; mindestens ein im Tank (T) an einer vom Benutzer vorgegebenen Position angeordnetes Anti-Schwapp-Bauteil (2), das dazu ausgebildet ist, das Schwappen und/oder die Bewegung des Kraftstoffs im Tank (T) bei einer vom Benutzer vorgegebenen Rate zu verhindern; eine Vielzahl von Lamellen (3), die im Anti-Schwapp-Bauteil (2) angeordnet und an einem Zentrum (4) befestigt sind, um das Anti-Schwapp-Bauteil (2) zu bilden; sowie ein Verriegelungselement (5), das dazu ausgebildet ist, das Anti-Schwapp-Bauteil (2) im Tank (T) derart zu fixieren, dass das Anti-Schwapp-Bauteil (2) sowohl mit dem Zentrum (4) als auch mit der Innenwand des Tanks (T) nahezu vollständig in Kontakt steht, **dadurch gekennzeichnet, dass** das Zentrum (4) eine Vielzahl von Kanälen (6) aufweist, die das Zentrum (4) nahezu vollständig umgeben, wobei die Lamellen (3) entlang der Kanäle (6) radial relativ zum Zentrum (4) verschiebbar sind und in eine vom Benutzer vorgegebene Position bringbar sind.

2. Anti-Schwapp-Mechanismus (1) nach Anspruch 1, **dadurch gekennzeichnet, dass** er mindestens eine Zugangstür (7) umfasst, die dazu ausgebildet ist, das Anti-Schwapp-Bauteil (2) in die vom Benutzer vorgegebene Position zu bringen und Zugang zu diesem zu ermöglichen, wobei das Anti-Schwapp-Bauteil (2) eine geschlossene Position (I) aufweist, in der die Lamellen (3) am Zentrum (4) einander gegenüberliegend angeordnet sind, sodass das Anti-Schwapp-Bauteil (2) durch die Zugangstür (7) einführbar ist, sowie eine offene Position (II), in der die Lamellen (3) vom Benutzer um das Zentrum (4) herum betätigt und entfaltet werden, sodass sie sich nahezu vollständig an die Innenwand des Tanks (T) anpassen und diese nahezu vollständig umschließen.

3. Anti-Schwapp-Mechanismus (1) nach einem der vorhergehenden Ansprüche, **dadurch gekennzeichnet, dass** er eine Vielzahl von Schlitzen (8) an jeder Lamelle (3) sowie eine Vielzahl von am Verriegelungselement (5) angeordneten Stiften (9) umfasst, wobei die Stifte (9) formkompatibel zu den Schlitzen (8) ausgebildet sind und in diese eingreifen, um das Anti-Schwapp-Bauteil (2) in einer vom Benutzer vorgegebenen Position zu fixieren.

4. Anti-Schwapp-Mechanismus (1) nach Anspruch 3, **dadurch gekennzeichnet, dass** das Verriegelungselement (5) eine Vielzahl von ersten Stiften (901) umfasst, die mit den Schlitzen (8) in ersten Kontakt treten, um das Anti-Schwapp-Bauteil (2) in einer gewünschten Position im Tank (T) zu halten, sowie eine Vielzahl von zweiten Stiften (902), die in die Schlitze (8) eingreifen und dadurch die Lamellen (3) derart bewegen, dass deren Endbereiche nahezu vollständig an der Innenwand des Tanks (T) anliegen, sodass das Anti-Schwapp-Bauteil (2) nahezu vollständig im Tank (T) fixiert ist.

5. Anti-Schwapp-Mechanismus (1) nach Anspruch 4, **dadurch gekennzeichnet, dass** die Lamellen (3) eine Vielzahl von ersten Schlitzen (801) mit exzentrischer Form sowie eine Vielzahl von zweiten Schlitzen (802) aufweisen, wobei die ersten Schlitze (801) formkompatibel zu den ersten Stiften (901) ausgebildet sind, sodass das Anti-Schwapp-Bauteil (2) in eine vom Benutzer festgelegte Position im Tank (T) bringbar ist, und wobei die zweiten Schlitze (802) mit den zweiten Stiften (902) in Eingriff bringbar sind, um das Anti-Schwapp-Bauteil (2) im Tank (T) in der vom Benutzer festgelegten Position zu verriegeln und zu fixieren.

6. Anti-Schwapp-Mechanismus (1) nach einem der Ansprüche 3 bis 5, **dadurch gekennzeichnet, dass** das Verriegelungselement (5) aus einem härteren Material als das Anti-Schwapp-Bauteil (2) besteht, sodass bei Eingriff der Stifte (9) in die Schlitze (8) die Lamellen (3) gegen die Innenwand des Tanks (T) gedrückt werden, wodurch das Anti-Schwapp-Bauteil (2) im Tank (T) fixiert wird.

7. Anti-Schwapp-Mechanismus (1) nach Anspruch 1, **dadurch gekennzeichnet, dass** die Lamellen (3) eine L- und/oder T-Flanschform aufweisen, wobei die Lamellen einzeln oder als ein stückige Einheit durch die Zugangstür (7) in den Tank (T) einführbar sind und im Bereich der Flanschteile an der Innenwand des Tanks (T) anliegen, sodass die Innenwand des Tanks (T) mittels des Verriegelungselements (5) nahezu vollständig umschlossen wird.

8. Anti-Schwapp-Mechanismus (1) nach Anspruch 7, **dadurch gekennzeichnet, dass** jede Lamelle (3) eine Vielzahl von Aussparungen (10) aufweist und das Verriegelungselement (5) eine Vielzahl von Vorsprüngen (11) umfasst, wobei die Vorsprünge (11) formkompatibel zu den Aussparungen (10) ausgebildet sind und in diese eingreifen, um das Anti-Schwapp-Bauteil (2) im Tank (T) zu fixieren.

9. Anti-Schwapp-Mechanismus (1) nach einem der vorhergehenden Ansprüche, **dadurch gekennzeichnet, dass** die Lamellen (3) eine Vielzahl von Öffnungen (12) mit vom Benutzer vorgegebenen geometrischen Formen aufweisen, sodass die Bewegung des Kraftstoffs im Tank (T) so beeinflusst wird, dass ein Schwappen verhindert und die Bewegung in eine vom Benutzer vorgegebene Konfiguration gelenkt wird.

10. Anti-Schwapp-Mechanismus (1) nach einem der vorhergehenden Ansprüche, **dadurch gekennzeichnet, dass** der Tank (T) in einem Luft-, Raum-, Land- oder Seefahrzeug vorgesehen ist.

## Revendications

1. Mécanisme anti-ballottement (1) comprenant un réservoir (T) disposé dans un véhicule automobile pour contenir un carburant ; au moins un organe anti-ballottement (2) disposé dans le réservoir (T) à une position prédéterminée par l'utilisateur et apte à empêcher le carburant de balloter et/ou de s'agiter dans le réservoir (T) à un débit prédéterminé par l'utilisateur ; une pluralité de pales (3) disposées dans l'organe anti-ballottement (2) adaptées à la section du réservoir (T) ; un centre (4) auquel chacune des pales (3) est fixée de manière à former l'organe anti-ballottement (2) ; un élément de verrouillage (5) configuré pour fixer l'organe anti-ballottement (2) dans le réservoir (T) de sorte que l'organe anti-ballottement (2) soit en contact quasi complet à la fois avec le centre (4) et avec la paroi interne du réservoir (T), **caractérisé en ce qu'**il comprend une pluralité de canaux (6) disposés sur le centre (4) de manière à entourer quasi complètement ledit centre (4), les pales (3) étant configurées pour être déplacées radialement le long desdits canaux (6) autour du centre (4) et amenées à une position prédéterminée par l'utilisateur.

2. Mécanisme anti-ballottement (1) selon la revendication 1 ou 2, **caractérisé en ce qu'**il comprend au moins une trappe d'accès (7) permettant d'amener l'organe anti-ballottement (2) à la position prédéterminée par l'utilisateur et de donner accès audit organe anti-ballottement (2) ; ledit organe anti-ballottement (2) présentant une position fermée (I) dans laquelle les pales (3) sont disposées sur le centre (4) en vis-à-vis les unes des autres, de sorte qu'il puisse être introduit par l'utilisateur à travers la trappe d'accès (7), et une position ouverte (II) dans laquelle les pales (3) sont actionnées et déployées par l'utilisateur autour du centre (4), de manière à épouser quasi complètement la forme de la paroi interne du réservoir (T) et à entourer quasi complètement ladite paroi interne du réservoir (T).

3. Mécanisme anti-ballottement (1) selon l'une quelconque des revendications précédentes, **caractérisé en ce qu'**il comprend une pluralité de fentes (8) disposées sur chaque pale (3); une pluralité de goupilles (9) disposées sur l'élément de verrouillage (5), lesdites goupilles étant de forme compatible avec les fentes (8) et insérées dans lesdites fentes (8) afin de fixer l'organe anti-ballottement (2) dans une position prédéterminée par l'utilisateur.

4. Mécanisme anti-ballottement (1) selon la revendication 3, **caractérisé en ce qu'**il comprend une pluralité de premières goupilles (901) disposées sur l'élément de verrouillage (5), lesquelles établissent un premier contact avec la fente (8), permettant ainsi de maintenir l'organe anti-ballottement (2) dans la position souhaitée pour sa fixation dans le réservoir (T) ; une pluralité de secondes goupilles (902) disposées sur l'élément de verrouillage (5), lesquelles sont insérées secondairement dans les fentes (8), provoquant ainsi le déploiement des pales (3) de sorte que les extrémités des pales (3) viennent en contact quasi complet avec la paroi interne du réservoir (T), l'organe anti-ballottement (2) étant alors quasi complètement fixé dans le réservoir (T).

5. Mécanisme anti-ballottement (1) selon la revendication 4, **caractérisé en ce qu'**il comprend une pluralité de premières fentes (801) disposées sur les pales (3) présentant une forme excentrée, lesquelles sont quasi complètement de forme compatible avec les premières goupilles (901), de sorte que lorsque les premières goupilles (901) sont positionnées dans les premières fentes (801), lesdites premières fentes (801) permettent d'amener l'organe anti-ballottement (2) à la position souhaitée dans le réservoir (T), ladite position étant déterminée par l'utilisateur ; une pluralité de secondes fentes (802) disposées sur les pales (3), dans lesquelles, après que les premières goupilles (901) et les premières fentes (801) sont disposées en regard l'une de l'autre dans le réservoir (T), les secondes fentes (802) sont engagées sur les secondes goupilles (902) de manière à assurer le verrouillage et la fixation de l'organe anti-ballottement (2) dans le réservoir (T) à une position déterminée par l'utilisateur.

6. Mécanisme anti-ballottement (1) selon l'une quelconque des revendications 3 à 5, **caractérisé en ce que** l'élément de verrouillage (5) est réalisé en un matériau plus dur que celui de l'organe anti-ballottement (2), de sorte que, lorsque les goupilles (9) sont positionnées dans la fente (8) en regard l'une de l'autre, ledit élément pousse les pales (3) vers la paroi interne du réservoir (T), les extrémités des pales (3) étant pressées contre ladite paroi interne du réservoir (T), assurant ainsi la fixation de l'organe anti-ballottement (2).

7. Mécanisme anti-ballottement (1) selon la revendication 1, **caractérisé en ce que** la pluralité de pales (3) présente une forme à bride en L et/ou en T, lesdites pales étant introduites individuellement ou d'un seul tenant dans le réservoir (T) à travers la trappe d'accès (7), lesdites pales venant en contact avec la paroi interne du réservoir (T) au niveau des parties en bride et entourant quasi complètement les parois internes du réservoir au moyen de l'élément de verrouillage (5).

8. Mécanisme anti-ballottement (1) selon la revendication 7, **caractérisé en ce qu'**il comprend une pluralité d'évidements (10) disposés sur chaque pale (3) ; une pluralité de saillies (11) disposées sur l'élément de verrouillage (5), lesdites saillies étant configurées pour correspondre aux évidements (10) des pales (3) de manière compatible en forme et être insérées dans lesdits évidements (10) afin de permettre la fixation de l'organe anti-ballottement (2) dans le réservoir (T).

9. Mécanisme anti-ballottement (1) selon l'une quelconque des revendications précédentes, **caractérisé en ce qu'**il comprend une pluralité d'orifices (12) disposés sur les pales (3), lesdits orifices présentant des formes géométriques prédéterminées par l'utilisateur, de sorte à permettre le mouvement du carburant dans le réservoir (T) sans générer de ballottement et à orienter ledit mouvement selon une configuration prédéterminée par l'utilisateur.

10. Mécanisme anti-ballottement (1) selon l'une quelconque des revendications précédentes, **caractérisé en ce que** le réservoir de carburant (T) est prévu dans un véhicule aérien, spatial, terrestre et/ou maritime.
